# EUROPEAN PATENT SPECIFICATION

(11) **EP 3 312 015 B1**
(45) Date of publication and mention of the grant of the patent: **28.04.2021**
(21) Application number: 17192934.2
(22) Date of filing: 25.09.2017
(51) Int. Cl.: B41J 29/393, B41J 29/02, B41J 2/355

(54) **BATTERY-POWERED PRINTER AND METHOD FOR DRIVING BATTERY-POWERED PRINTER**
BATTERIEBETRIEBENER DRUCKER UND VERFAHREN ZUR ANSTEUERUNG DES BATTERIEBETRIEBENEN DRUCKERS
IMPRIMANTE ALIMENTÉE PAR BATTERIE ET PROCÉDÉ D'ENTRAÎNEMENT D'IMPRIMANTE ALIMENTÉE PAR BATTERIE

(30) Priority: 24.10.2016 JP 2016208022
(43) Date of publication of application: 25.04.2018
(73) Proprietor: Toshiba TEC Kabushiki Kaisha, Tokyo 141-8562 (JP)
(72) Inventor: TSUCHIMOTO, Hiroshi, Shinagawa-ku,, Tokyo 141-8562 (JP)
(74) Representative: Bandpay & Greuter

(56) References cited:
- EP-A1- 2 935 026
- JP-A- 2005 354 874
- JP-B2- 4 225 274
- US-A1- 2004 183 840
- US-A1- 2014 379 285
- US-A1- 2015 172 495
- US-A1- 2016 056 665
- US-A1- 2016 110 141

## Description

### FIELD

Embodiments described herein relate generally to a battery-powered printer.

### BACKGROUND

In the related art, a portable printer using a battery as a power source exists. In such a printer, it is common to set control parameters for printing according to characteristics of the battery. For example, in the related art, a technology of changing a printing speed according to a remaining battery amount has been developed.

In addition, recently, a high output battery capable of outputting a larger current is also on the market. Such a high output battery, for example, enables a printer having a thermal head to increase the number of heat generating elements that can generate heat at one time, increasing the printing speed

US 2015/172495 A1 discloses a battery-powered printer comprising a battery, a printing mechanism and a processor.

However, in the printer of the related art, a printing control parameter is set in accordance with the characteristics of just one type of battery. Therefore, even if the battery is replaced by a high output battery having higher output capability, there is a possibility that the output capability of the high output battery cannot be utilized effectively.

To solve the above-cited problems, there is provided a battery-powered printer comprising: a battery receptacle in which a battery is detachably mounted;
a printing mechanism driven by electric power output from the battery during printing on a recording medium; and
a processor configured to perform an operation of functional units including an electric power control unit and a drive control unit;
characterized in that:
the electric power control unit is configured to identify, before printing of print data is performed, a type of the battery, classified based on a maximum value of a current which can be output by the battery, mounted in the battery receptacle, and notify the drive control unit of the identification result; and
the drive control unit is configured to specify a drive parameter corresponding to the type notified from the electric power control unit, and control the operation of the printing mechanism based on various setting values included in the specified drive parameter comprising printing parameter and additional parameter;
wherein the printing parameter is a parameter defining various setting values of the printing mechanism relating to a printing operation of print data, and
the additional parameter is a parameter additionally defining a setting value of an operation of the printing mechanism in relation to the printing operation of the print data.

Preferably, the drive control unit is configured to change the drive parameter so as to set a higher printing speed for the printing mechanism, as the a maximum value of a current which can be output by the battery is higher.

Preferably still, the printing mechanism includes a thermal head in which a plurality of heat generating elements for generating heat are arranged, and is configured to perform the printing on the recording medium by generating heat through the heat generating elements, and
the drive control unit is configured to set a maximum number of heat generating elements capable of generating heat at the same time depending on the identified type of battery.

Preferably yet, the printing mechanism includes a thermal head in which a plurality of heat generating elements for generating heat are arranged, and is configured to perform the printing on the recording medium by generating heat through the heat generating elements, and
the drive control unit is configured to set an energization time depending on the identified type of battery.

Suitably, the printing mechanism includes a transporting mechanism that transports the recording medium, and
the drive control unit is configured to set a transport speed of the transporting mechanism depending on the identified type of battery.

Suitably still, the transporting mechanism includes a stepping motor, and
the drive control unit is configured to set excitation modes under which the stepping motor is driven, depending on the identified type of battery.

Suitably yet, the drive control unit is configured to change the drive parameter under which the printing mechanism is driven depending on the identified type of battery and a drive parameter table in which drive parameters for the printing mechanism for each type of the battery are set.

Typically, the drive control unit is configured to set the drive parameter under which the printing mechanism is driven depending on the identified type of battery and a relational expression with which a corresponding drive parameter can be derived from the type of the battery.

The present invention also relates to a method for driving a battery-powered printer that includes including a battery receptacle in which a battery is detachably mounted, and a printing mechanism driven by electric power output from the battery during printing on a recording medium, characterized in that the method comprises:
before printing of the print data is performed, identifying a type of the battery, classified based on a maximum value of a current which can be output by the battery, mounted in the battery receptacle;
specifying a drive parameter corresponding to the identified type; and
   controlling the operation of the printing mechanism based on various setting values included in the specified drive parameter comprising printing parameter and additional parameter; wherein
the printing parameter is a parameter defining various setting values of the printing mechanism relating to a printing operation of print data, and
the additional parameter is a parameter additionally defining a setting value of an operation of the printing mechanism in relation to the printing operation of the print data.

Preferably, in the method, the drive parameter is changed so as to set a higher printing speed for the printing mechanism, as the a maximum value of a current which can be output by the battery is higher.

Preferably still, in the method, the printing mechanism includes a thermal head in which a plurality of heat generating elements for generating heat are arranged, and is configured to perform the printing on the recording medium by generating heat through the heat generating elements, and
a maximum number of heat generating elements capable of generating heat at the same time is set depending on the identified type of battery.

Preferably yet, in the method, the printing mechanism includes a thermal head in which a plurality of heat generating elements for generating heat are arranged, and is configured to perform the printing on the recording medium by generating heat through the heat generating elements, and
an energization time is set depending on the identified type of battery.

Suitably, in the method, the printing mechanism includes a transporting mechanism that transports the recording medium, and
a transport speed of the transporting mechanism is set depending on the identified type of battery.

Suitably still, in the method, the transporting mechanism includes a stepping motor, and
excitation modes under which the stepping motor is driven are set depending on the identified type of battery.

Suitably still, in the method, the specifying a drive parameter corresponding to the identified type is based on a drive parameter table in which drive parameters for the printing mechanism for each type of the battery are set.

### DESCRIPTION OF THE DRAWINGS

FIG. 1 is a perspective view of a printer according to an embodiment.
FIG. 2 is perspective view of the printer in a state where a cover is open.
FIG. 3 is a diagram schematically showing a printing mechanism of the printer according to the embodiment.
FIG. 4 is a block diagram showing a control system of the printer according to the embodiment.
FIG. 5 is a diagram schematically showing a data structure of a drive parameter table.
FIG. 6 is a flowchart depicting an example of a process performed by the printer of the embodiment.

### DETAILED DESCRIPTION

Embodiments provide a battery-powered printer and a program capable of effectively utilizing an output capacity of a battery.

In general, according to one embodiment, there is provided a printer including a battery receptacle in which a battery is detachably mounted, a printing mechanism driven by electric power output from the battery during printing on a recording medium, and a processor configured to identify a type of the battery mounted on the battery receptacle, and change a drive parameter under which the printing mechanism is driven, depending on the identified type of battery.

Hereinafter, an embodiment of a printer and a program will be described in detail with reference to the accompanying drawings. The embodiment which will be described below is one embodiment of the printer and the program, and does not limit a configuration, specifications, or the like thereof.

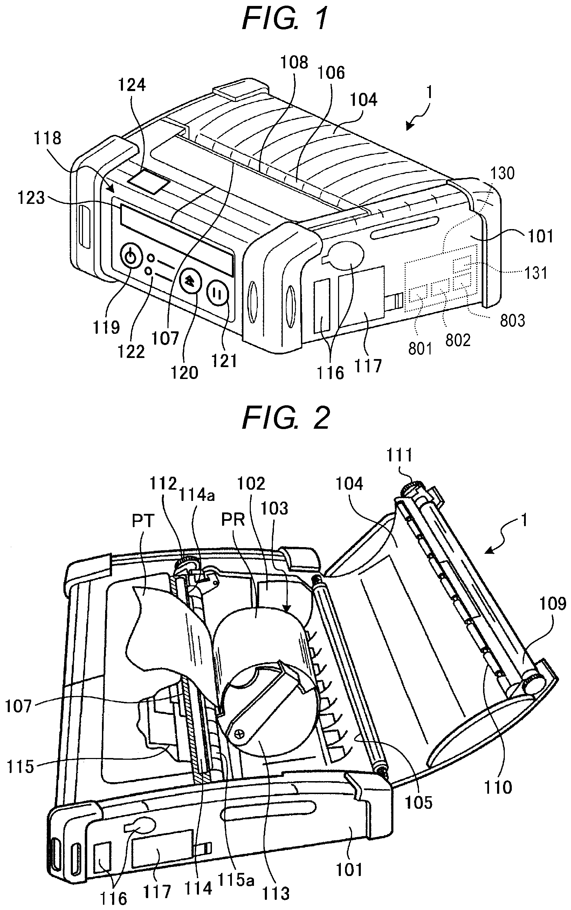

FIG. 1 is a perspective view showing an appearance of a printer 1 according to the embodiment. FIG. 2 is a perspective view showing the appearance of the printer 1 in a state where a cover 104 (described later) is open.

The printer 1 includes a rectangular parallelepiped housing 101. The housing 101 includes an internal structure for accommodating a paper roll PR on which a paper PT as a medium to be printed is wound. An opening portion 102 is formed in an upper surface of the housing 101 so as to accommodate the paper roll PR into the housing 101 therethrough. In addition, a paper accommodating unit 103 capable of detachably accommodating the paper roll PR is formed inside the housing 101. Here, for example, the paper PT is a heat sensitive paper, a label sheet in which a plurality of labels formed of a heat sensitive paper are attached to a mount of a non-heat sensitive paper, or the like.

The opening portion 102 becomes an open state or a closed state by opening and closing the cover 104 rotatably provided. The cover 104 is rotatably attached to a rear side edge 105 of the housing 101. The rear side edge 105 forms one side portion of the edge of the opening portion 102. In a state where the cover 104 is closed, a paper discharging outlet 108 for drawing out the printed paper PT is formed between an outer side 106 and a front side edge 107 of the housing 101. The outer side 106 forms a front tip portion of the cover 104. The front side edge 107 of the housing 101 forms one side of the opening portion 102.

In addition, the cover 104 includes a platen roller 109, a paper press roller 110, and a driven gear 111. The platen roller 109 is provided at a position corresponding to a line thermal head 114 in the housing 101 (see FIG. 2) . That is, the platen roller 109 is in contact with a line thermal head 114 in a state where the cover 104 is closed. The paper press roller 110 is provided in the vicinity of the platen roller 109, and is in contact with the head cover 115a in the state where the cover 104 is closed. Both of the platen roller 109 and the paper press roller 110 are rotatable about rotation axes parallel to a width direction of the printer 1.

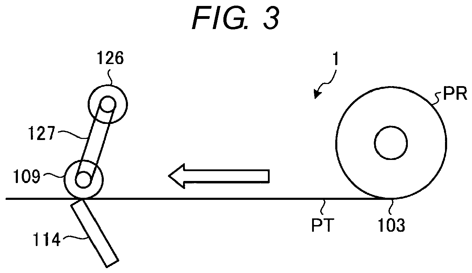

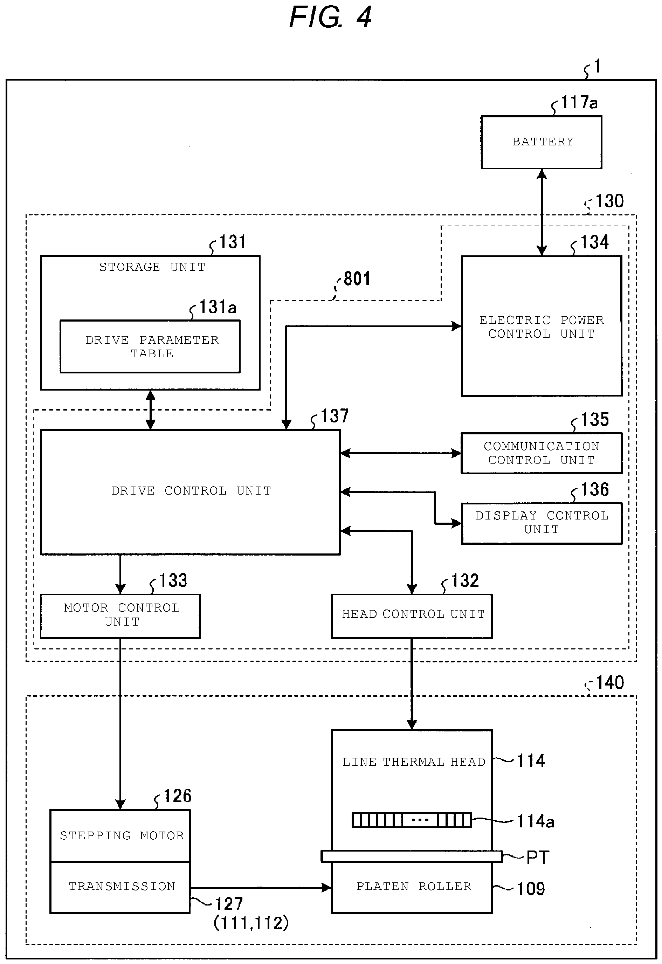

The driven gear 111 that rotates integrally with the platen roller 109 is provided on one end side of the platen roller 109. In addition, a drive gear 112 is provided at a position corresponding to the driven gear 111 inside the housing 101. The driven gear 111 meshes with the drive gear 112 in the state where the cover 104 is closed. The drive gear 112 rotates by using a stepping motor 126 (see FIG. 3 and FIG. 4) as the driving power source. Accordingly, the driven gear 111 is driven by the drive gear 112 and thereby rotationally drives the platen roller 109 connected to the driven gear 111. In the embodiment, the driven gear 111 and the drive gear 112 constitute a transmission 127 (see FIG. 3 and FIG. 4) which will be described below.

The paper roll PR is accommodated in the paper accommodating unit 103 in a state where a roll axis is parallel to the width direction of the printer 1. The paper PT of the paper roll PR is drawn out by a rotation of the platen roller 109, and transported in a direction (sub-scanning direction) of the paper discharging outlet 108. In this embodiment, the paper roll PR is accommodated detachably between a pair of guide fences 113 in the paper accommodating unit 103.

The line thermal head 114 is disposed at a position corresponding to the platen roller 109 inside the housing 101. The line thermal head 114 faces the platen roller 109 of the cover 104 in the state where the cover 104 is closed. A head bracket 115 is fixed to the housing 101, and thereby biases the line thermal head 114 upward and toward the rear side of the printer 1. The head cover 115a is mounted on the housing 101 if necessary. The head cover 115a prevents vibration by biasing the line thermal head 114.

The line thermal head 114 includes a plurality of heat generating elements 114a arranged in a line in a main scanning direction orthogonal to the sub-scanning direction. Here, the main scanning direction is parallel to the width direction of the printer 1. The heat generating elements 114a are heat generating elements that generate heat in response to energization, and each element corresponds to a pixel of one dot. The heat generating elements 114a generate heat under the control of a head control unit 132 (see FIG. 4), and thus the line thermal head 114 heats the paper PT to perform printing line by line. Since a large amount of energy is required for heating the head, the head control unit 132 drives the heat generating elements 114a in a time-divided manner during printing of one line. The maximum number of heat generating elements 114a capable of generating heat at the same time is referred to as the number of simultaneously energized dots.

In addition, a connector 116 and a battery accommodating unit 117 (e.g., a battery receptacle) are provided on one side surface of the housing 101 (see FIG. 2). The connector 116 is a connection terminal for connecting with an external device. The battery accommodating unit 117 accommodates detachably accommodating a battery 117a (see FIG. 4) as a power source for driving. The battery 117a accommodated in the battery accommodating unit 117 is connected to a power source connector (not shown) inside the housing 101.

In addition, the housing 101 includes a display and operation unit 118. The display and operation unit 118 includes a power switch 119, a paper feed button 120 for inputting a user's instruction such as paper feeding, a pause button 121 for inputting a user's instruction such as a temporary stop of the paper feeding, an indicator 122 for notifying the user of a state of the battery 117a, a liquid crystal display (LCD) 123, and a communication window 124 for infrared communication.

The printer 1 communicates various data with the external device connected through the communication window 124 and the connector 116. For example, the printer 1 receives print data which is subjected to be printed on the paper PT from the external device by this data communication, stores the print data in a storage unit 131 (see FIG. 4), and prints the print data on the paper PT. Here, for example, the external device is an information processing device such as a personal computer (PC), a POS terminal, a mobile phone, and a handy terminal.

Next, a printing mechanism of the printer 1 will be described with reference to FIG. 3. Here, FIG. 3 is a diagram schematically showing the printing mechanism of the printer 1.

As depicted in FIG. 3, in the printer 1, when the paper roll PR is accommodated in the paper accommodating unit 103, the paper PT is pulled out from the paper roll PR, and the cover 104 is closed, the pulled out paper PT is sandwiched between the platen roller 109 and the line thermal head 114 in the state where the cover 104 is closed.

In a state where the paper PT is sandwiched between the platen roller 109 and the line thermal head 114, the stepping motor 126 drives and rotates the platen roller 109 through the transmission 127 according to a drive control unit 137 which consists of the processor 801, as will be described below by referring FIG.4. With this, the paper PT is transported in the sub-scanning direction (arrow direction in FIG. 3) from the paper roll PR via the line thermal head 114 toward the paper discharging outlet 108. In addition, the line thermal head 114 performs printing on the paper PT, which is transported in the sub-scanning direction, by generating heat from the heat generating elements 114a according to control of the head control unit 132 which will be described below.

Next, a control system 130 of the printer 1 will be described. FIG. 4 is a diagram showing the control system 130 of the printer 1. As shown in FIGs. 1 and 4, the printer 1 includes the control system 130 including a processor 801, a read only memory (ROM) 802, a random access memory (RAM) 803, and a storage unit 131.

The processor 801 performs the operation of all of the functional units (the head control unit 132, a motor control unit 133, an electric power control unit 134, a communication control unit 135, a display control unit 136, and the drive control unit 137) by executing programs or the like stored in the read only memory (ROM) 802, the random access memory (RAM) 803 or the storage unit 131. The processor 801 is, for example, a central processing unit (CPU) . The storage unit 131 is, for example, a flash memory. Detailed functions of the above functional units will be explained below. Moreover, all or some of the functions of the above functional units (the head control unit 132, a motor control unit 133, an electric power control unit 134, a communication control unit 135, a display control unit 136, and the drive control unit 137) can be realized by a control circuit, ASIC, programmed processor, or a combination thereof.

In addition, the printer 1 includes, as a printing mechanism 140, the platen roller 109, the line thermal head 114 (heat generating elements 114a), the stepping motor 126, and the transmission 127 (driven gear 111 and drive gear 112) described above.

The storage unit 131 is a storage medium such as a flash memory. The storage unit 131 stores various pieces of setting information such as a drive parameter table 131a (see FIG. 4) in which drive parameters of the printing mechanism are set, in addition to the program relating to control of the printer 1.

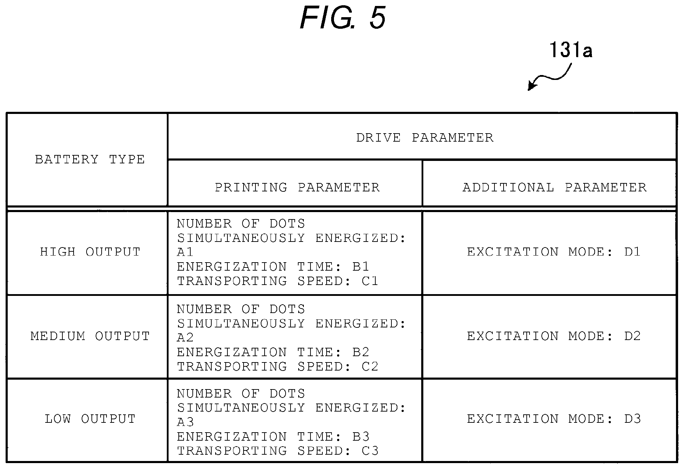

FIG. 5 is a diagram showing schematically a data structure of the drive parameter table 131a. As shown in FIG. 5, drive parameters of the printing mechanism for each type of the battery are set in the drive parameter table 131a. The battery types are types classified based on the output characteristics of the battery 117a (e.g., output capacity). For example, the battery types can be classified based on a maximum value or the like of a current which can be output by the battery 117a.

The method for classifying the battery types is not limited to specific one. Various methods may be adopted. For example, physical quantities (for example, current values) which serve as indices of classification may be divided by a range having a predetermined width, and the battery types may be classified based on the divided ranges . FIG. 5 shows an example in which the battery 117a is classified into three levels of "high output", "medium output", and "low output" based on the maximum value of the current which can be output from the battery 117a. The number of classifications of the battery type is not limited to three as long as the number of classifications is two or more.

The drive parameter is roughly divided into a printing parameter and an additional parameter. The printing parameter is a parameter defining various setting values of the printing mechanism 140 relating to a printing operation of the print data. Examples of the printing parameter include the number of dots which are simultaneously energized, an energization time of the heat generating elements 114a, a transport speed of the paper PT, and the like.

The additional parameter is a parameter additionally defining a setting value of an operation of the printing mechanism 140 in relation to the printing operation of the print data. Examples of the additional parameter include an excitation method (excitation mode) of the stepping motor 126 or the like.

A setting value in accordance with battery type of the battery 117a which can be accommodated in a battery accommodating unit 117 is set in each of the drive parameters. Here, it is assumed that the setting value, as the printing parameter, is set such that the printing speed of the printing mechanism 140 is faster as the battery, which is accommodated in a battery accommodating unit 117, is of a battery type that generates higher output capability, that is, of the battery type that can output a higher current value. For example, it is preferable that the number of dots which are simultaneously energized is set to a larger value as the output capability of the battery increases. In other words, it is preferable to set the number time divisions of driving the line thermal head 114 to be small. In addition, it is preferable to set the energization time to a shorter time as the output capacity of the battery increases. In addition, it is preferable to set the transport speed of the paper PT to a higher speed as the output capacity of the battery increases.

In addition, it is assumed that the setting value, as the additional parameter, is set such that the output capacity is utilized more effectively as the output capacity of the battery increases. For example, the excitation method of the stepping motor 126 may be set so as to use dual-phase excitation with high power consumption or the like in a case where the battery is of the high output type, to use 1-2 phase excitation in a case where the battery is of the medium output type, and to use single-phase excitation in a case where the battery is of the low output type.

As described above, by setting the drive parameter, the printing mechanism 140 driven based on the drive parameter can increase the printing speed by utilizing effectively the output capacity of the battery 117a.

Returning to FIG. 4, the head control unit 132 controls electric power supplied to heat generating elements 114a by energizing the line thermal head 114 so as to cause the heat generating elements 114a to generate heat in accordance with the print data under the control of the drive control unit 137. Here, the magnitude of the energy to be supplied for printing is in proportion to the number of heat generating elements 114a that are actually energized for printing.

The motor control unit 133 controls the transport speed of the paper PT, that is, the printing speed in the sub-scanning direction of the line thermal head 114 by outputting the drive pulse signal to the stepping motor 126 under the control of the drive control unit 137.

The electric power control unit 134 controls turning on and turning off of the electric power supplied from the battery 117a in the battery accommodating unit 117, according to the turning on and turning off operations of the power switch 119 of the display and operation unit 118. Specifically, the electric power control unit 134 supplies the electric power of the battery 117a to each unit of the printer 1, when the power switch 119 is turned on.

In addition, the electric power control unit 134 identifies the battery type of the battery 117a accommodated in the battery accommodating unit 117, and notifies the drive control unit 137 of the identification result. Here, the method for identifying the battery type is not limited to specific one. Various methods may be adopted. For example, the electric power control unit 134 may obtain identification information indicating the battery type from the battery 117a and identify the battery type of the battery 117a based on the identification information obtained from the battery 117a. The identification information may be information indicating the output characteristics, a brand name, or the like stored in the battery 117a. In addition, the identification information may be information obtained by performing an analogue to digital conversion of a resistance value of a resistor provided in the battery 117a for identifying the battery type.

The communication control unit 135 communicates various data with the external device connected through the connector 116, the communication window 124, or the like by using a communication interface (not shown). For example, the communication control unit 135 receives the print data transmitted from the external device, and stores the received print data in the storage unit 131. Examples of the communication interface include infrared communication such as IrDA, USB, wireless local area network (LAN), RS-232C, Bluetooth (registered trademark), and the like.

The display control unit 136 controls contents displayed on an LCD 123 of the display and operation unit 118. For example, the contents displayed may include electric wave reception state or the like.

The drive control unit 137 manages the operations of the respective units of the printer 1. The drive control unit 137 controls the head control unit 132 and the motor control unit 133 so as to cause the print data stored temporarily in the storage unit 131 to be printed on the paper PT. In addition, the drive control unit 137 deletes the print data, which has already been printed, from the storage unit 131.

In addition, the drive control unit 137 controls the operation of the printing mechanism 140 based on the drive parameter corresponding to the battery type identified in the electric power control unit 134. Specifically, the drive control unit 137 specifies the drive parameter corresponding to the battery type notified from the electric power control unit 134 from the drive parameters stored in the drive parameter table 131a. Then, the drive control unit 137 controls the operation of the printing mechanism 140 based on various setting values included in the specified drive parameter (printing parameter and additional parameter).

For example, the drive control unit 137 controls the number of the heat generating elements 114a which can be energized at the same time by the head control unit 132 and the energization time thereof based on the number of dots which are simultaneously energized and the energization time set in the printing parameter. In addition, the drive control unit 137 controls the motor control unit 133 based on the transport speed set in the printing parameter, to thereby control the transport speed of the paper PT transported by driving of the stepping motor 126. Further, the drive control unit 137 outputs the drive pulse signal for realizing the excitation mode to the motor control unit 133 based on the excitation mode set in the additional parameter.

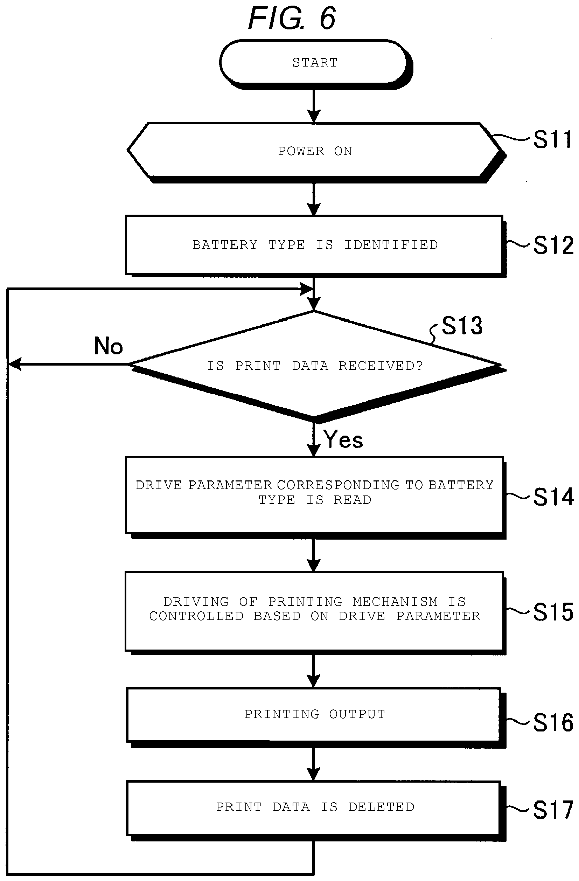

Next, a process performed by the printer 1 will be described with reference to FIG. 6. FIG. 6 is a flowchart depicting an example of the process performed by the printer 1 (control systems 130).

First, when the power source of the printer 1 is turned on by the turning on operation or the like of the power switch 119, the electric power control unit 134 supplies the electric power supplied from the battery 117a to each unit of the printer 1 (step S11). Subsequently, the electric power control unit 134 identifies the battery type of the battery 117a accommodated in the battery accommodating unit 117 (step S12).

Subsequently, the drive control unit 137 waits until the communication control unit 135 receives the print data (step S13; No), and if the communication control unit 135 receives the print data (step S13; Yes), the drive control unit 137 proceeds to execute step S14.

In step S14, the drive control unit 137 specifies the drive parameter corresponding to the battery type identified in step S12 from the drive parameter table 131a, and reads the identified drive parameter (step S14). Subsequently, the drive control unit 137 controls driving of the printing mechanism 140 (head control unit 132 and motor control unit 133) based on setting content of the read drive parameter (step S15), and causes the printing mechanism 140 to perform printing onto the paper PT based on the print data (step S16).

Accordingly, when the printing of the print data is completed, the drive control unit 137 deletes the print data from the storage unit 131 (step S17), and the process returns to step S13.

As described above, the printer 1 of the embodiment identifies the battery type of the battery 117a accommodated in the battery accommodating unit 117, and controls the driving of the printing mechanism 140 by using the drive parameter corresponding to the identified battery type. With this, even if the battery 117a is replaced, it is possible to drive the printing mechanism 140 using the drive parameter which is suitable for the battery type of the battery 117a after the replacement. Thus, it is possible to effectively utilize the output capacity of the battery 117a accommodated in the battery accommodating unit 117.

In addition, the printer 1 of the embodiment changes the drive parameter so as to increase the printing speed of the printing mechanism 140 as the battery type of the battery 117a is a type of the higher output capacity. With this, the printer 1 can utilize effectively the output capacity of the battery 117a and increase the printing speed.

So far, while certain embodiments of the present disclosure have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the framework of the inventions. The accompanying claims are intended to cover such forms or modifications as would fall within the scope of the inventions.

For example, in the embodiment, the drive parameter corresponding to the battery type of the battery 117a is specified based on the drive parameter table 131a. However, the embodiment is not limited thereto. For example, the drive parameter corresponding to the battery type of the battery 117a may be specified by using a relational expression with which a corresponding driving parameter can be derived from the battery type of the battery 117a.

In addition, in the embodiment, the battery type of the battery 117a at the time of turning on the power source of the printer 1 is identified (see step S12 of FIG. 6). However, a timing for identifying the battery type is not limited thereto. For example, the electric power control unit 134 may identify the battery type at a timing at which printing of the print data is performed. In this case, the electric power control unit 134 can identify the battery type at the timing at which printing of the print data is performed by performing the process of step S12 shown in FIG. 6 between steps S13 and S14.

In addition, the exemplary embodiment is applied to the independent printer 1. However, the present disclosure is not limited thereto and may be applied to the information processing device such as a POS terminal including the control system 130 and the printing mechanism 140 of the above-described printer 1. In addition, in the embodiment, the printing mechanism 140 of the printer 1 is of the thermal type. However, the printing mechanism 140 is not limited thereto, and may be implemented as another method such as an ink jet method. In this case, it is assumed that the drive parameter for each battery type is set to a setting value based on a method of the printing mechanism 140.

In addition, the program to be executed by the printer 1 of the above-described embodiment is previously provided by being incorporated in a storage medium (ROM or storage unit) included in the printer 1, but the embodiment is not limited thereto. The program may be configured to be provided by being recorded on a computer-readable recording medium such as a CD-ROM, a flexible disk (FD), a CD-R, and a digital versatile disk (DVD) in an installable format or executable format file. Furthermore, the storage medium is not limited to a medium independent of the computer or an embedded system, but also includes a storage medium where a program transmitted through a LAN, the Internet, or the like is downloaded thereto and stored or temporarily stored therein.

In addition, the program to be executed by the printer 1 of the above-described embodiment may be configured to be provided by being stored on a computer connected to a network such as the Internet and by being downloaded via a network, or may be configured to be provided or distributed via the network such as the Internet.

## Claims

1. A battery-powered printer comprising:
a battery receptacle (117) in which a battery (117a) is detachably mounted;
a printing mechanism (140) driven by electric power output from the battery (117a) during printing on a recording medium; and
a processor (801) configured to perform an operation of functional units including an electric power control unit (134) and a drive control unit (137); **characterized in that**:
the electric power control unit (134) is configured to identify, before printing of print data is performed, a type of the battery (117a), classified based on a maximum value of a current which can be output by the battery (117a), mounted in the battery receptacle (117), and notify the drive control unit (137) of the identification result; and
the drive control unit (137) is configured to specify a drive parameter corresponding to the type notified from the electric power control unit (134), and control the operation of the printing mechanism (140) based on various setting values included in the specified drive parameter comprising printing parameter and additional parameter;
wherein the printing parameter is a parameter defining various setting values of the printing mechanism (140) relating to a printing operation of print data, and
the additional parameter is a parameter additionally defining a setting value of an operation of the printing mechanism (140) in relation to the printing operation of the print data.

2. The printer according to claim 1,
wherein the drive control unit (137) is configured to change the drive parameter so as to set a higher printing speed for the printing mechanism (140), as the a maximum value of a current which can be output by the battery (117a) is higher.

3. The printer according to claim 1 or 2,
wherein the printing mechanism (140) includes a thermal head (114) in which a plurality of heat generating elements (114a) for generating heat are arranged, and is configured to perform the printing on the recording medium by generating heat through the heat generating elements (114a), and
the drive control unit (137) is configured to set a maximum number of heat generating elements (114a) capable of generating heat at the same time depending on the identified type of battery.

4. The printer according to claim 1 or 2,
wherein the printing mechanism (140) includes a thermal head (114) in which a plurality of heat generating elements (114a) for generating heat are arranged, and is configured to perform the printing on the recording medium by generating heat through the heat generating elements (114a), and
the drive control unit (134) is configured to set an energization time depending on the identified type of battery.

5. The printer according to any one of claims 1 to 4,
wherein the printing mechanism (140) includes a transporting mechanism that transports the recording medium, and
the drive control unit (137) is configured to set a transport speed of the transporting mechanism depending on the identified type of battery.

6. The printer according to claim 5,
wherein the transporting mechanism includes a stepping motor (126), and
the drive control unit (137) is configured to set excitation modes under which the stepping motor (126) is driven, depending on the identified type of battery.

7. The printer according to any one of claims 1 to 6,
wherein the drive control unit (137) is configured to change the drive parameter under which the printing mechanism (140) is driven depending on the identified type of battery and a drive parameter table (131a) in which drive parameters for the printing mechanism (140) for each type of the battery are set.

8. The printer according to any one of claims 1 to 7,
wherein the drive control unit (137) is configured to set the drive parameter under which the printing mechanism (140) is driven depending on the identified type of battery and a relational expression with which a corresponding drive parameter can be derived from the type of the battery.

9. A method for driving a battery-powered printer that includes including a battery receptacle (117) in which a battery (117a) is detachably mounted, and a printing mechanism (140) driven by electric power output from the battery (117a) during printing on a recording medium, **characterized in that** the method comprises:
before printing of the print data is performed, identifying a type of the battery (117a), classified based on a maximum value of a current which can be output by the battery (117a), mounted in the battery receptacle (117);
specifying a drive parameter corresponding to the identified type; and
controlling the operation of the printing mechanism (140) based on various setting values included in the specified drive parameter comprising printing parameter and additional parameter; wherein
the printing parameter is a parameter defining various setting values of the printing mechanism (140) relating to a printing operation of print data, and
the additional parameter is a parameter additionally defining a setting value of an operation of the printing mechanism (140) in relation to the printing operation of the print data

10. The method according to claim 9,
wherein the drive parameter is changed so as to set a higher printing speed for the printing mechanism (140), as the a maximum value of a current which can be output by the battery (117a) is higher.

11. The method according to claim 9 or 10,
wherein the printing mechanism (140) includes a thermal head (114) in which a plurality of heat generating elements (114a) for generating heat are arranged, and is configured to perform the printing on the recording medium by generating heat through the heat generating elements (114a), and
a maximum number of heat generating elements (114a) capable of generating heat at the same time is set depending on the identified type of battery.

12. The method according to claim 9 or 10,
wherein the printing mechanism (140) includes a thermal head (114) in which a plurality of heat generating elements (114a) for generating heat are arranged, and is configured to perform the printing on the recording medium by generating heat through the heat generating elements (114a), and
an energization time is set depending on the identified type of battery.

13. The method according to any one of claims 9 to 12,
wherein the printing mechanism (140) includes a transporting mechanism that transports the recording medium, and
a transport speed of the transporting mechanism is set depending on the identified type of battery.

14. The method according to claim 13,
wherein the transporting mechanism includes a stepping motor (126), and
excitation modes under which the stepping motor (126) is driven are set depending on the identified type of battery.

15. The method according to any one of claims 9 to 14,
wherein the specifying a drive parameter corresponding to the identified type is based on a drive parameter table (131a) in which drive parameters for the printing mechanism (140) for each type of the battery are set.

## Patentansprüche

1. Batteriebetriebener Drucker, Folgendes umfassend:
ein Batteriefach (117), in das eine Batterie (117a) entnehmbar montiert ist,
einen Druckmechanismus (140), der beim Drucken auf ein Aufzeichnungsmedium durch die von der Batterie (117a) ausgegebene Elektroenergie angetrieben wird,
einen Prozessor (801), der dafür konfiguriert ist, einen Betrieb funktionaler Einheiten durchzuführen, die eine Elektroenergie-Steuereinheit (134) und eine Antriebssteuereinheit (137) einschließen,
**dadurch gekennzeichnet, dass**:
die Elektroenergie-Steuereinheit (134) dafür konfiguriert ist, vor dem Durchführen des Druckens von Druckdaten einen Typ der Batterie (117a) zu identifizieren, der basierend auf einem Maximalwert eines Stroms klassifiziert ist, der von der Batterie (117a) ausgegeben werden kann, welche in das Batteriefach (117) montiert ist, und der Antriebssteuereinheit (137) das Identifikationsergebnis mitzuteilen, und
die Antriebssteuereinheit (137) dafür konfiguriert ist, einen Antriebsparameter zu spezifizieren, welcher dem Typ entspricht, der von der Elektroenergie-Steuereinheit (134) mitgeteilt wird, und den Betrieb des Druckmechanismus (140) basierend auf verschiedenen Einstellungswerten zu steuern, die in dem spezifizierten Antriebsparameter enthalten sind, welcher einen Druckparameter und einen zusätzlichen Parameter umfasst,
wobei der Druckparameter ein Parameter ist, der verschiedene Einstellungswerte des Druckmechanismus (140) definiert, die den Betrieb eines Druckens von Druckdaten betreffen, und
der zusätzliche Parameter ein Parameter ist, der zusätzlich einen Einstellungswert eines Betriebes des Druckmechanismus (140) in Bezug auf den Betrieb des Druckens der Druckdaten definiert.

2. Drucker nach Anspruch 1,
wobei die Antriebssteuereinheit (137) dafür konfiguriert ist, den Antriebsparameter derart zu ändern, dass eine höhere Druckgeschwindigkeit für den Druckmechanismus (140) eingestellt wird, wenn der Maximalwert eines Stroms, der von der Batterie (117a) ausgegeben werden kann, höher ist.

3. Drucker nach Anspruch 1 oder 2,
wobei der Druckmechanismus (140) einen Thermodruckkopf (114) beinhaltet, in dem mehrere wärmeerzeugende Elemente (114a) zum Erzeugen von Wärme angeordnet sind und der dafür konfiguriert ist, das Drucken auf das Aufzeichnungsmedium durch Erzeugen von Wärme durch die wärmeerzeugenden Elemente (114a) durchzuführen, und
die Antriebssteuereinheit (137) dafür konfiguriert ist, abhängig von dem identifizierten Typ der Batterie eine maximale Anzahl von wärmeerzeugenden Elementen (114a) einzustellen, die in der Lage sind, gleichzeitig Wärme zu erzeugen.

4. Drucker nach Anspruch 1 oder 2,
wobei der Druckmechanismus (140) einen Thermodruckkopf (114) beinhaltet, in dem mehrere wärmeerzeugende Elemente (114a) zum Erzeugen von Wärme angeordnet sind und der dafür konfiguriert ist, das Drucken auf das Aufzeichnungsmedium durch Erzeugen von Wärme durch die wärmeerzeugenden Elemente (114a) durchzuführen, und
die Antriebssteuereinheit (134) dafür konfiguriert ist, abhängig von dem identifizierten Typ der Batterie eine Einschaltzeit einzustellen.

5. Drucker nach einem der Ansprüche 1 bis 4,
wobei der Druckmechanismus (140) einen Transportmechanismus beinhaltet, der das Aufzeichnungsmedium transportiert, und
die Antriebssteuereinheit (137) dafür konfiguriert ist, abhängig von dem identifizierten Typ der Batterie eine Transportgeschwindigkeit des Transportmechanismus einzustellen.

6. Drucker nach Anspruch 5,
wobei der Transportmechanismus einen Schrittmotor (126) beinhaltet und
die Antriebssteuereinheit (137) dafür konfiguriert ist, abhängig von dem identifizierten Typ der Batterie Erregungsmodi einzustellen, unter denen der Schrittmotor (126) angetrieben wird.

7. Drucker nach einem der Ansprüche 1 bis 6,
wobei die Antriebssteuereinheit (137) dafür konfiguriert ist, abhängig von dem identifizierten Typ der Batterie und einer Antriebsparametertabelle (131a), in der Antriebsparameter für den Druckmechanismus (140) für jeden Typ der Batterie festgelegt sind, den Antriebsparameter zu wechseln, unter dem der Druckmechanismus (140) angetrieben wird.

8. Drucker nach einem der Ansprüche 1 bis 7,
wobei die Antriebssteuereinheit (137) dafür konfiguriert ist, abhängig von dem identifizierten Typ der Batterie und einem Vergleichsausdruck, mit dem ein entsprechender Antriebsparameter von dem Typ der Batterie abgeleitet werden kann, den Antriebsparameter einzustellen, unter dem der Druckmechanismus (140) angetrieben wird.

9. Verfahren zum Antreiben eines batteriebetriebenen Druckers, der ein Batteriefach (117), in das eine Batterie (117a) entnehmbar montiert ist, und einen Druckmechanismus (140) beinhaltet, der beim Drucken auf ein Aufzeichnungsmedium durch die von der Batterie (117a) ausgegebene Elektroenergie angetrieben wird, wobei das Verfahren Folgendes umfasst:
vor dem Durchführen des Druckens von Druckdaten Identifizieren eines Typs der Batterie (117a), der basierend auf einem Maximalwert eines Stroms klassifiziert wird, der von der Batterie (117a) ausgegeben werden kann, welche in das Batteriefach (117) montiert ist,
Spezifizieren eines Antriebsparameters, welcher dem Typ entspricht, und
Steuern des Betriebes des Druckmechanismus (140) basierend auf verschiedenen Einstellungswerten, die in dem spezifizierten Antriebsparameter enthalten sind, welcher einen Druckparameter und einen zusätzlichen Parameter umfasst, wobei:
der Druckparameter ein Parameter ist, der verschiedene Einstellungswerte des Druckmechanismus (140) definiert, die den Betrieb des Druckens von Druckdaten betreffen, und
der zusätzliche Parameter ein Parameter ist, der zusätzlich einen Einstellungswert eines Betriebes des Druckmechanismus (140) in Bezug auf den Betrieb des Druckens der Druckdaten definiert.

10. Verfahren nach Anspruch 9,
wobei der Antriebsparameter derart geändert wird, dass eine höhere Druckgeschwindigkeit für den Druckmechanismus (140) eingestellt wird, wenn der Maximalwert eines Stroms, der von der Batterie (117a) ausgegeben werden kann, höher ist.

11. Verfahren nach Anspruch 9 oder 10,
wobei der Druckmechanismus (140) einen Thermodruckkopf (114) beinhaltet, in dem mehrere wärmeerzeugende Elemente (114a) zum Erzeugen von Wärme angeordnet sind und der dafür konfiguriert ist, das Drucken auf das Aufzeichnungsmedium durch Erzeugen von Wärme durch die wärmeerzeugenden Elemente (114a) durchzuführen, und
abhängig von dem identifizierten Typ der Batterie eine maximale Anzahl von wärmeerzeugenden Elementen (114a), die in der Lage sind, gleichzeitig Wärme zu erzeugen, eingestellt wird.

12. Verfahren nach Anspruch 9 oder 10,
wobei der Druckmechanismus (140) einen Thermodruckkopf (114) beinhaltet, in dem mehrere wärmeerzeugende Elemente (114a) zum Erzeugen von Wärme angeordnet sind und der dafür konfiguriert ist, das Drucken auf das Aufzeichnungsmedium durch Erzeugen von Wärme durch die wärmeerzeugenden Elemente (114a) durchzuführen, und
abhängig von dem identifizierten Typ der Batterie eine Einschaltzeit eingestellt wird.

13. Verfahren nach einem der Ansprüche 9 bis 12,
wobei der Druckmechanismus (140) einen Transportmechanismus beinhaltet, der das Aufzeichnungsmedium transportiert, und
abhängig von dem identifizierten Typ der Batterie eine Transportgeschwindigkeit des Transportmechanismus eingestellt wird.

14. Verfahren nach Anspruch 13,
wobei der Transportmechanismus einen Schrittmotor (126) beinhaltet und
abhängig von dem identifizierten Typ der Batterie Erregungsmodi eingestellt werden, unter denen der Schrittmotor (126) angetrieben wird.

15. Verfahren nach einem der Ansprüche 9 bis 14,
wobei das Spezifizieren eines Antriebsparameters, welcher dem identifizierten Typ entspricht, auf einer Antriebsparametertabelle (131a) basiert, in der Antriebsparameter für den Druckmechanismus (140) für jeden Typ der Batterie festgelegt sind.

## Revendications

1. Imprimante à batterie comprenant :
un logement de batterie (117) dans lequel une batterie (117a) est montée de manière amovible ;
un mécanisme d'impression (140) entraîné par une énergie électrique délivrée par la batterie (117a) pendant l'impression sur un support d'enregistrement ; et
un processeur (801) configuré pour effectuer une opération d'unités fonctionnelles comprenant une unité de régulation d'énergie électrique (134) et une unité de commande d'entraînement (137) ;
**caractérisée en ce que** :
l'unité de commande d'énergie électrique (134) est configurée pour identifier, avant que l'impression de données à imprimer soit effectuée, un type de la batterie (117a), classé sur la base d'une valeur maximale d'un courant qui peut être délivré par la batterie (117a), montée dans le logement à batterie (117), et pour indiquer à l'unité de commande d'entraînement (137) le résultat de l'identification ; et
l'unité de commande d'entraînement (137) est configurée pour spécifier un paramètre d'entraînement qui correspond au type indiqué par l'unité de commande d'énergie électrique (134), et pour contrôler le fonctionnement du mécanisme d'impression (140) sur la base de différentes valeurs de réglage incluses dans le paramètre d'entraînement spécifié, comprenant un paramètre d'impression et un paramètre supplémentaire ;
dans laquelle le paramètre d'impression est un paramètre qui définit différentes valeurs de réglage du mécanisme d'impression (140) relatives à une opération d'impression de données à imprimer, et
le paramètre supplémentaire est un paramètre qui définit en outre une valeur de réglage d'une opération du mécanisme d'impression (140) en lien avec l'opération d'impression des données à imprimer.

2. Imprimante selon la revendication 1,
dans laquelle l'unité de commande d'entraînement (137) est configurée pour modifier le paramètre d'entraînement de façon à définir une vitesse d'impression plus élevée pour le mécanisme d'impression (140), lorsque la valeur maximale d'un courant qui peut être délivré par la batterie (117a) est plus élevée.

3. Imprimante selon la revendication 1 ou 2,
dans laquelle le mécanisme d'impression (140) comprend une tête thermique (114) dans laquelle une pluralité d'éléments de génération de chaleur (114a) destinés à générer de la chaleur est prévue, et est configuré pour effectuer l'impression sur le support d'enregistrement en générant de la chaleur par le biais des éléments de génération de chaleur (114a), et
l'unité de commande d'entraînement (137) est configurée pour définir un nombre maximal d'éléments de génération de chaleur (114a) capables de générer de la chaleur en même temps selon le type de batterie identifié.

4. Imprimante selon la revendication 1 ou 2,
dans laquelle le mécanisme d'impression (140) comprend une tête thermique (114) dans laquelle une pluralité d'éléments de génération de chaleur (114a) destinés à générer de la chaleur est prévue, et est configuré pour effectuer l'impression sur le support d'enregistrement en générant de la chaleur par le biais des éléments de génération de chaleur (114a), et
l'unité de commande d'entraînement (134) est configurée pour définir une durée de mise sous tension selon le type de batterie identifié.

5. Imprimante selon l'une quelconque des revendications 1 à 4,
dans laquelle le mécanisme d'impression (140) comprend un mécanisme de transport qui transporte le support d'enregistrement, et
l'unité de commande d'entraînement (137) est configurée pour définir une vitesse de transport du mécanisme de transport selon le type de batterie identifié.

6. Imprimante selon la revendication 5,
dans laquelle le mécanisme de transport comprend un moteur pas-à-pas (126), et
l'unité de commande d'entraînement (137) est configurée pour définir des modes d'excitation dans lesquels le moteur pas-à-pas (126) est entraîné, selon le type de batterie identifié.

7. Imprimante selon l'une quelconque des revendications 1 à 6,
dans laquelle l'unité de commande d'entraînement (137) est configurée pour modifier le paramètre d'entraînement selon lequel le mécanisme d'impression (140) est entraîné en fonction du type de batterie identifié et d'une table de paramètres d'entraînement (131a) dans laquelle les paramètres d'entraînement du mécanisme d'impression (140) pour chaque type de batterie sont définis.

8. Imprimante selon l'une quelconque des revendications 1 à 7,
dans laquelle l'unité de commande d'entraînement (137) est configurée pour définir le paramètre d'entraînement selon lequel le mécanisme d'impression (140) est entraîné en fonction du type de batterie identifié et d'une expression relationnelle avec laquelle un paramètre d'entraînement correspondant peut être dérivé du type de batterie.

9. Procédé d'entraînement d'une imprimante à batterie qui comprend un logement de batterie (117) dans lequel une batterie (117a) est montée de manière amovible, et un mécanisme d'impression (140) entraîné par une énergie électrique délivrée par la batterie (117a) pendant l'impression sur un support d'enregistrement, **caractérisé en ce que** le procédé comprend :
avant que l'impression des données à imprimer soit effectuée, l'identification d'un type de la batterie (117a), classé sur la base d'une valeur maximale d'un courant qui peut être délivré par la batterie (117a), montée dans le logement à batterie (117) ;
la spécification d'un paramètre d'entraînement qui correspond au type identifié ; et
le contrôle du fonctionnement du mécanisme d'impression (140) sur la base de différentes valeurs de réglage incluses dans le paramètre d'entraînement spécifié, comprenant un paramètre d'impression et un paramètre supplémentaire ; dans lequel
le paramètre d'impression est un paramètre qui définit différentes valeurs de réglage du mécanisme d'impression (140) relatives à une opération d'impression des données à imprimer, et
le paramètre supplémentaire est un paramètre qui définit en outre une valeur de réglage d'une opération du mécanisme d'impression (140) en lien avec l'opération d'impression des données à imprimer.

10. Procédé selon la revendication 9,
dans lequel le paramètre d'entraînement est modifié de façon à définir une vitesse d'impression plus élevée pour le mécanisme d'impression (140), lorsque la valeur maximale d'un courant qui peut être délivré par la batterie (117a) est plus élevée.

11. Procédé selon la revendication 9 ou 10,
dans lequel le mécanisme d'impression (140) comprend une tête thermique (114) dans laquelle une pluralité d'éléments de génération de chaleur (114a) destinés à générer de la chaleur est prévue, et est configuré pour effectuer l'impression sur le support d'enregistrement en générant de la chaleur par le biais des éléments de génération de chaleur (114a), et
un nombre maximal d'éléments de génération de chaleur (114a) capables de générer de la chaleur en même temps est défini selon le type de batterie identifié.

12. Procédé selon la revendication 9 ou 10,
dans lequel le mécanisme d'impression (140) comprend une tête thermique (114) dans laquelle une pluralité d'éléments de génération de chaleur (114a) destinés à générer de la chaleur est prévue, et est configuré pour effectuer l'impression sur le support d'enregistrement en générant de la chaleur par le biais des éléments de génération de chaleur (114a), et
une durée de mise sous tension est définie selon le type de batterie identifié.

13. Procédé selon l'une quelconque des revendications 9 à 12,
dans lequel le mécanisme d'impression (140) comprend un mécanisme de transport qui transporte le support d'enregistrement, et
une vitesse de transport du mécanisme de transport est définie selon le type de batterie identifié.

14. Procédé selon la revendication 13,
dans lequel le mécanisme de transport comprend un moteur pas-à-pas (126), et
des modes d'excitation dans lesquels le moteur pas-à-pas (126) est entraîné sont définis selon le type de batterie identifié.

15. Procédé selon l'une quelconque des revendications 9 à 14,
dans lequel la spécification d'un paramètre d'entraînement qui correspond au type identifié repose sur une table de paramètres d'entraînement (131a) dans laquelle des paramètres d'entraînement destinés au mécanisme d'impression (140) pour chaque type de batterie sont définis.
